Europäisches Patentamt

European Patent Office

Office européen des brevets

(11) Publication number: **0 291 468**
**A2**

# (12) EUROPEAN PATENT APPLICATION

(21) Application number: 88830133.0

(22) Date of filing: 30.03.88

(51) Int. Cl.⁴: **B 60 J 7/08**

(30) Priority: 12.05.87 IT 2048787

(43) Date of publication of application:
17.11.88 Bulletin 88/46

(84) Designated Contracting States:
AT BE CH DE ES FR GB LI NL

(71) Applicant: SAIP COMPONENTI S.P.A.
Vocabolo Sabbione, 23
I-05100 Terni (IT)

(72) Inventor: Salvatori, Gabriele
Saip Componenti S.p.a. Vocabolo Sabbione 23
I-05100 Terni (IT)

(74) Representative: Cicogna, Franco
Ufficio Internazionale Brevetti Dott.Prof. Franco Cicogna
Via Visconti di Modrone, 14/A
I-20122 Milano (IT)

(54) A compass openable roof for motor vehicles.

(57) The openable roof comprises a perimetrical frame (1) to be associated to a motor vehicle body and defining an opening for receiving a compass openable plate (7) which,at one edge,is coupled to hinge elements (10) engaging with the perimetrical frame (1) and,at the opposite edge,is coupled to a plate lifting guide (21) provided with an elongated slot (22) therein engages one end of a rod (24) pivoted to a rack block (25) in turn engaging with a driving pignon (30) which can be driven by a knob (31) accessible from the inside of the motor vehicle compartment,the rod (24) being moreover provided with a slotted guide (27) engageable with a fixed pin (28) so as to cause the rod (24) to swing as the rack block (25) is displaced.

Fig.1

Description

## A COMPASS OPENABLE ROOF FOR MOTOR VEHICLES

### BACKGROUND OF THE INVENTION

The present invention relates to a roof for motor vehicles in general,which roof can be opened by a compass type of movement.

As is known,motor vehicles are frequently provided with sliding roofs,mounted on the top of the motor vehicle body,which are operated by very complex means provided for carrying out the roof opening and closing operations.

In the above mentioned sliding roofs,complex linkages are generally used for raising the roof panel in order to open it.

In actual practice it has been found that these linkages are frequently subjected to jammings and misalignements.

### SUMMARY OF THE INVENTION

Accordingly,the task of the present invention is to overcome the above mentioned drawbacks by providing a roof,adapted to be opened by a compass type of movement,for motor vehicles and the like,which is structurally very simple and is coupled by very simple means to the motor vehicle body.

Within the scope of the above mentioned task a main object of the present invention is to provide such a motor vehicle openable roof which can be easily removed from the motor vehicle body for maintenance,repairing and the like jobs.

Another object of the present invention is to provide such a roof which can be snugly fitted to the motor vehicle body and which moreover is effective to provide a tight coupling with said body.

Another object of the present invention is to provide such a roof for motor vehicle in general which can be fitted to existing motor vehicle in a very simple and quick way.

Yet another object of the present invention is to provide such a roof which is very reliable in operation and requires a minimum of maintenance.

According to one aspect of the present invention,the above mentioned task and objects,as well as yet other objects,which will become more apparent hereinafter,are achieved by a compass openable roof for motor vehicle and the like,characterized in that it comprises a perimetrical frame to be coupled to the body of said motor vehicle and defining an opening for housing a compass openable plate.

This plate,at an edge thereof,is coupled to hinge elements engaging with the frame and,at the exposed edge,is associated with a raising or lifting guide provided with an elongated slot therein an end portion of a rod engages which is articulated to a rack block cooperating with a pignon driven by a knob accessible from the inside of the motor vehicle compartment.

The mentioned rod is moreover provided with a slotted guide engageable with a fixed pin for swinging said rod as said rack block is displaced.

### BRIEF DESCRIPTION OF THE DRAWINGS

Further characteristics and advantages of the invention will become more apparent hereinafter from the following detailed description of a preferred though not exclusive embodiment of a compass openable motor vehicle roof according to the invention which is illustrated,by way of a not limitative example,in the figures of the accompanying drawings,where:

Figure 1 is a schematic top view illustrating a motor vehicle openable roof according to the present invention;

Figure 2 is an elevation view of that same roof;

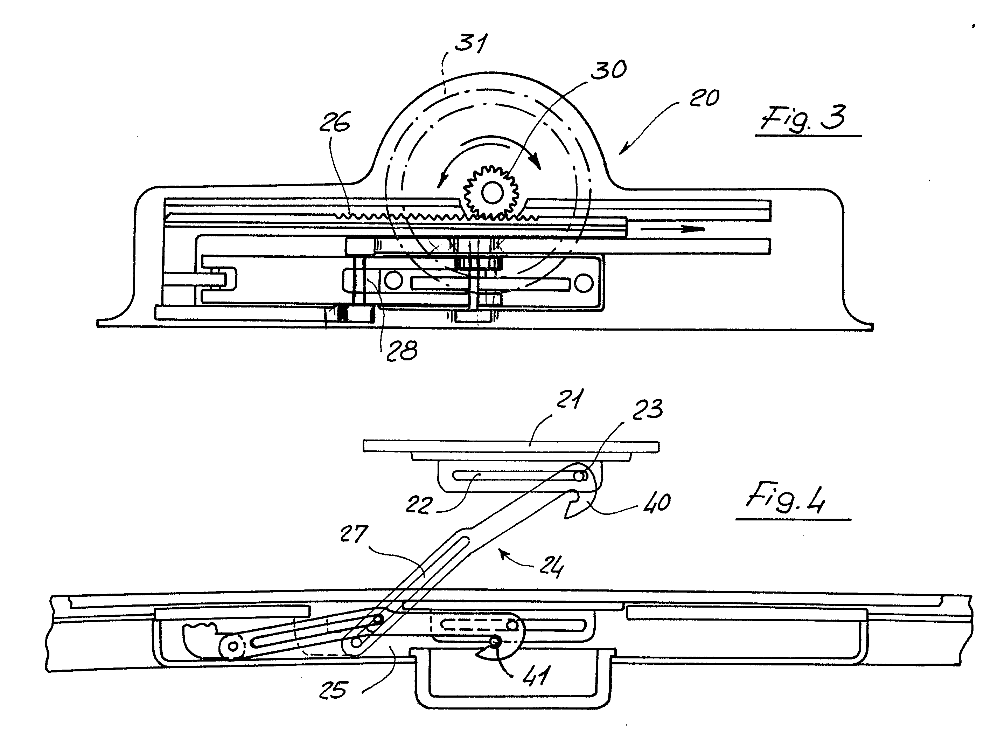

Fig.3 is a partial cross-sectional top view of an assembly for operating or driving the roof according to the present invention;

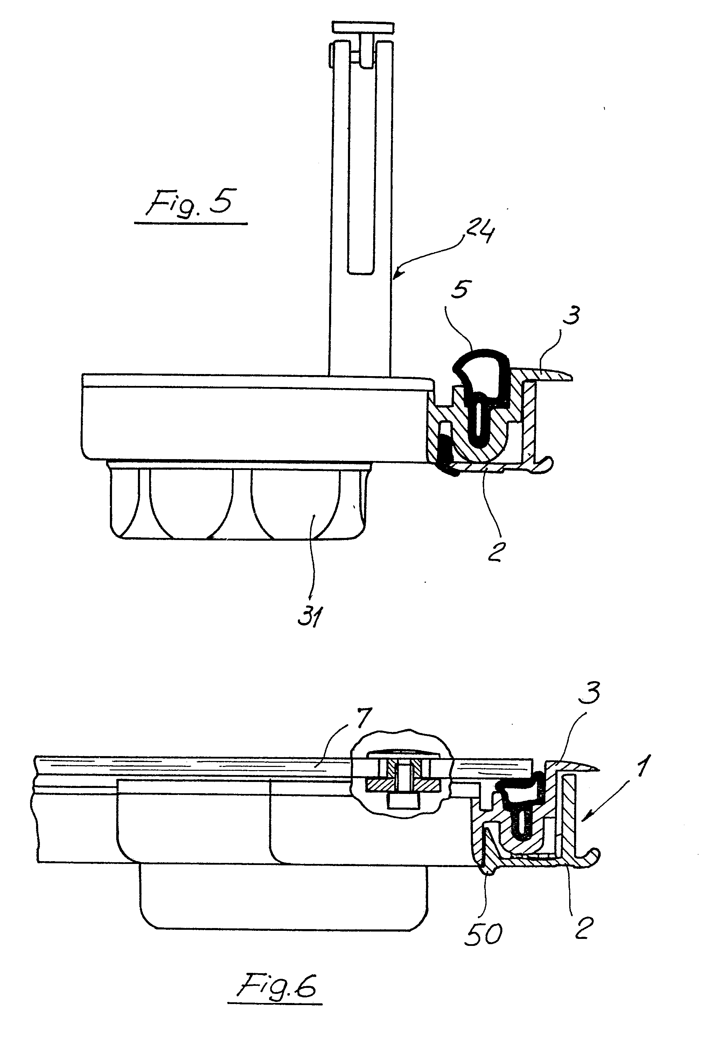

Fig.4 is an elevation view of the driving assembly,the opening or opened position of the roof being shown by a thin line;

Fig.5 is a cross-sectional view taken along the line V-V of figure 1;

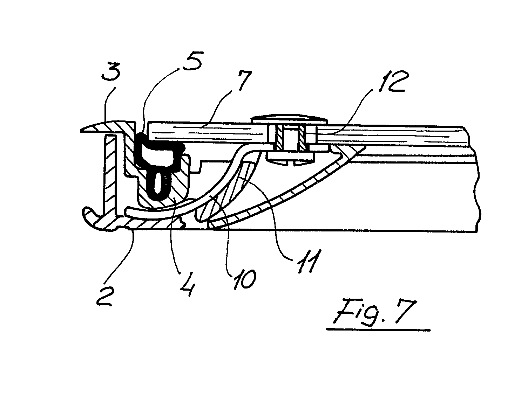

Fig.6 is a cross-sectional view taken along the line VI-VI of figure 1; and

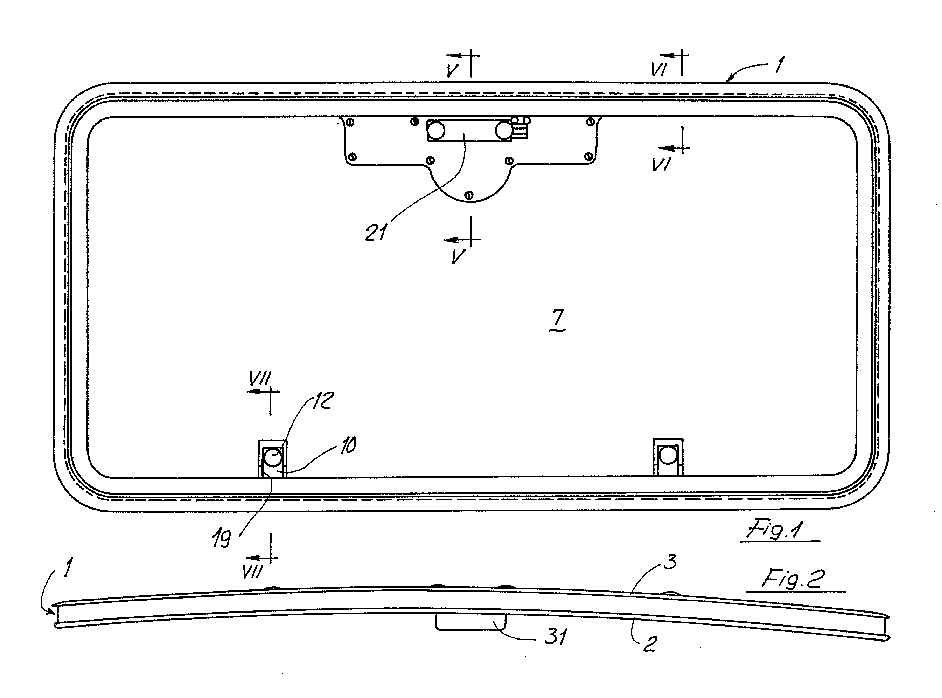

Fig;7 is a cross-sectional view taken along the line VII-VII of fig.1.

### DESCRIPTION OF THE PREFERRED EMBODIMENTS

With reference to the figures of the accompanying drawings,the compass openable roof for motor vehicle and the like according to the present invention comprises a perimetrical frame,indicated overally at the reference number 1,which is advantageously formed by an inner frame 2 and an outer frame 3,which can be made by bent section members or as a single piece.

The inner and outer frames 2 and 3 may be coupled to one another so as to affix the roof frame to the edges of the motor vehicle body thereto said roof is to be applied.

The outer frame 3 is provided,at the outwardly turned portion thereof,with a housing 4 therein a sealing gasket is housed,indicated at 5,adapted to tightly engage with a plate 7 which is made of any suitable materials such as glass,plastics materials, metal sheet materials and the like.

The plate 7,at one edge thereof,is hinged to an edge of the frame 1;this coupling is made by two sheet metal pieces 10 having a circle sector shape which engage in corresponding cradle seats 11 formed on the perimetrical frame 1 for carrying out a pivoting movement.

More specifically said sheet metal pieces 10 are affixed,at one end thereof,on said plate by means of screw means 12.

At the opposite edge of the plate 7 there is arranged a roof opening and closing assembly,which has been overally indicated at the reference number 20 in the drawings.

This driving assembly 20 consists of a raising or lifting guide 21 which is affixed to the lower face of the plate 7 and is provided with an elongated slot 22,extending in a substantially horizontal direction.

In the elongated slot 22 a sliding pin 23 is engaged which is affixed to one end of a rod,indicated overally by the reference number 24 which,at its other end,is pivoted to a rack block 25 provided with a rack portion 26 and able of sliding in the casing of the driving assembly 20.

The rod 24,at its pivoting part to the block 25,defines a slotted guide 27 therein a fixed pin 28 is engaged which is rigidly supported by the casing of the driving assembly 20.

The rack portion 26 engages with a pignon 20 which may be driven by a knob 31 accessible from the inside of the motor vehicle compartment and which has a pivoting axis substantially perpendicular to the plate 7.

By the disclosed coupling means,as the operating knob 31 is rotated,the block 25 will be displaced.

Since the displacement line of the pivot point of the rod 25 does not cross the pin 28,as the pin 25 is displaced,the mentioned rod 24 will be rotated so as to cause the plate 7 to swing;in fact,as aforesaid, this rod is pivoted on the opposite edge through the hinges consisting of the mentioned sheet metal pieces 10 engaging in the cradle seats 11.

Thus,said plate can be opened or closed compass wise.

The rod 24,at its end engaging with the slot 22,is provided with a hook portion 40 which engages with a coupling pin 41 as the plate 7 is in its closure position,so as to provide a perfectly tight closure.

A main feature of the present invention is that the plate 7 can be easily removed since it will be easily possible to disengage the sliding pin 23 from the slot 22,since this pin is rigid with a sheet metal spring member coupled to one end of the rod: thus,by disengaging this spring from the rod,by means of a rotation movement,the pin can be withdrawn so as to disengage the plate,by simply rotating it in such a manner as to withdraw the sheet metal pieces 10 from the cradles seats 11.

In this connection,it should be pointed out that in the gap between the inner frame 2 and the outer frame 3 a finishing element 50 may be arranged, adapted to lock the roof finishing cloth,thereby concealing said frame.

In order to open or close the roof,that is the plate 7,the knob 31 must be rotated,so as to rotate the pignon 30 to cause the rack block 25 to slide for operating the rod coupled thereto.

As this rod 24 is displaced,the hook portion 40 will be disengaged from the coupling pin 41;then, with a continuous displacement,since the fixed pin 28 does not cross the displacement line of the pivot pin or point of the rod 24 with the rack block 25,a rotation will occur which,in combination with the displacement,will raise the guide 21 and,accordingly, the plate 7 coupled thereto.

For closing the roof the knob must be rotated anticlockwise;with the plate 7 in a completely closed position the hook member will engage and lock the coupling pin 41.

The provision of the hinge elements 10 on the opposite edge of the plate is effective to guide the rotation movement of the plate 7 with the advantage of quickly disengaging the plate 7,by a simple rotation of said plate so as to disengage the sheet metal pieces from the cradle seats 11.

From the above disclosure it should be apparent that the invention fully achieves the intended task and objects.

While the invention has been disclosed and illustrated with reference to a preferred embodiment thereof,it should be apparent that the disclosed embodiment is susceptible to several modifications and variations all of which come within the spirit and scope of the invention as defined in the accompanying claims.

**Claims**

1- A compass openable roof for motor vehicles and the like,characterized in that it comprises a perimetrical frame (1) to be associated to a motor vehicle body and defining an opening for receiving a compass openable plate (7),said plate,at one edge thereof, being coupled to hinge elements (10) engaging with said frame (1) and,at the opposite edge thereof,being coupled to a raising guide (21) provided with an elongated slot (22) therein engages one end of a rod (24) articulated to a rack block (25) in turn engaging with a pignon (30) which may be driven by a knob (31) accessible from the inside of the motor vehicle compartment,said rod (24) being moreover provided with a slotted guide (27) engageable with a fixed pin (28) to cause said rod to swing as said rack block (25) is displaced.

2- A roof according to claim 1,characterized in that said perimetrical frame (1) consists of an inner frame (2) and an outer frame (3),coupled to one another, said outer frame (3) defining on its face outwardly turned a seat for receiving a sealing gasket to be coupled to the edges of said plate (7).

3- A roof according to the preceding claims,characterized in that said hinge elements consist of metal sheet pieces (10) coupled to said plate (7) and having a portion of circle shape,said sheet metal pieces engaging in cradle seats(11) formed in said outer frame (3).

4- A roof according to one or more of the preceding claims,characterized in that said rod (24) engages in said slot (22) by means of a sliding pin (23) removably coupled to one end of said rod.

5- A roof according to one or more of the preceding claims,characterized in that the displacement line of the pivot point of said rod (24) and said rack block (25) does not cross said fixed pin.

6- A roof according to one or more of the preceding claims,characterized in that said rack block (25) is provided with a rack portion (26) engageable with said pignon rotatable about an axis which is substantial ly perpendicular to said plate (7).

7- A roof according to one or more of the preceding claims,characterized in that said rod (24) is provided,at its end engaging with said raising guide,with a hook portion (40) engaging with a coupling pin (41) as said plate is arranged in its closure position.

8- A roof of the compass openable type for motor vehicles and the like according to the preceding claims and substantially as disclosed and illustrated for the intended task and objects.

0291468

Fig.1

Fig.2

*Fig. 3*

*Fig. 4*

0291468

0291468

Fig. 5

Fig. 6

0291468

Fig. 7